# EUROPÄISCHE PATENTSCHRIFT

(11) **EP 1 131 582 B1**
(45) Veröffentlichungstag und Bekanntmachung des Hinweises auf die Patenterteilung: **09.02.2005**
(21) Anmeldenummer: 99972298.6
(22) Anmeldetag: 08.11.1999
(51) Int. Cl.: F21V 8/00

(54) **FLUORESZIERENDE, STRUKTURIERTE FORMKÖRPER**
FLUORESCENT, STRUCTURED SHAPED BODIES
CORPS MOULES STRUCTURES FLUORESCENTS

(30) Priorität: 18.11.1998 DE 19853106
(43) Veröffentlichungstag der Anmeldung: 12.09.2001
(73) Patentinhaber: Bayer MaterialScience AG, 51368 Leverkusen (DE)
(72) Erfinder: WEHRMANN, Rolf, D-47800 Krefeld (DE); HEUER, Helmut-Werner, D-47829 Krefeld (DE)
(86) Internationale Anmeldenummer: PCT/EP1999/008547
(87) Internationale Veröffentlichungsnummer: WO 2000/029785

(56) Entgegenhaltungen:
- WO-A-92/09909

## Beschreibung

Die Erfindung betrifft eine optische Anzeige für die Wiedergabe von bildlichen Darstellungen, Farbmustem oder Informationen. Die Wiedergabe von bildlichen Darstellungen, Farbmustem oder Informationen geschieht durch die optische Anregung von fluoreszierenden Substanzen in einem transparenten oder semitransparenten Kunststoff-Formkörper, der mit Mitteln zur gezielten Lichtauskopplung versehen ist.

Formkörper aus transparenten oder semitransparenten Kunststoffen, die mit fluoreszierenden Substanzen eingefärbt sind, sind bekannt (EP 0 025 136 und EP 0 032 670). Sie werden beispielsweise für Inneneinrichtungs- oder Dekorationsgegenstände verwendet. Auf solche bekannten Formkörper wird durch eine externe Quelle Licht flächig eingestrahlt. Das Fluoreszenzlicht wird an den äußeren Rändern der Formkörper sichtbar. Als Lichtquelle dient dabei das Umgebungslicht aus Lampen oder das Sonnenlicht. Diese bekannten Formkörper haben keine interne Strukturierung oder Oberflächenstrukturierung und dienen nicht der Wiedergabe von bildlichen Darstellungen, Farbmustern oder Informationen.

In neuerer Zeit werden fluoreszierende Substanzen in einem Überzug auf blauen Leuchtdioden verwendet, um im Wege der Lumineszenz-Konversion weißes Licht oder Licht einer beliebigen anderen Farbe zu erzeugen. Solche Leuchtdioden werden LUCOLED (Luminescent-Conversion-LED) genannt ("Die weiße LED ist da", Fraunhofer-Institut für Angewandte Festkörperphysik in elektronik industrie 6,1997, "NICHIA CHEMICAL Develops Efficient White LED Lamp", N.S. Shinbun in Supplement to TECHNICAL NEWSLETTER, 10, Ref.No. 21, 1996). Auch hier gibt es keine Strukturierung des die fluoreszierenden Substanzen enthaltenden Überzugs.

Die Druckschrift EP-A-0 399 507 beschreibt eine optische Anzeige gemäß dem Oberbegriff des Anspruchs 1.

Die erfindungsgemäße Aufgabe besteht darin, die Fluoreszenzemission aus Formkörpern aus transparenten oder semitransparenten Kunststoffen, die fluoreszierende Substanzen enthalten, in Kombination mit den Wellenleitereigenschaften der Formkörper, insbesondere für die bildliche Darstellung und die Wiedergabe von Farbmustern oder Informationen, zu nutzen.

Gegenstand der Erfindung ist eine optische Anzeige aus wenigstens einem Formkörper, der aus einem oder mehreren transparenten oder semitransparenten Kunstoffen besteht und eine oder mehrere fluoreszierende Substanzen enthält, der Formkörper Mittel zu gezielten Lichtauskopplung aufweist und eine einzelne Lichtquelle so angeordnet ist, dass ihr Licht an bestimmten Bereichen der Oberflächen in den Formkörpers eingekoppelt wird, im Formkörper weitergeleitet wird und an ganz bestimmten andren Bereichen der Oberfläche des Formkörpers, die durch die Mittel zur gezielten Lichtauskopplung festgelegt sind, mit einer größeren Wellenlänge als die des eingestrahlten Lichtes wieder austritt, dadurch gekennzeichnet, dass die Lichtquelle eines lichtemittierende Diode oder eine elektrolumineszierende Einheit, welche ausschließlich im blauen oder UV-Wellenlängenbereich emittiert, ist und dass der Lichtaustritt gleichzeitig in verschiedenen Farben erfolgen kann.

Unter Formkörper fallen beliebig gestaltete Körper wie beispielsweise Folien, Platten, Stränge, Fäden, Fasern, Rohre, Kugeln, Quader, Zylinder, Hohlkörper oder Ringe. Die Formkörper bestehen aus einem oder mehreren transparenten oder semitransparenten Kunststoffen. Jeder Kunststoff enthält eine oder mehrere fluoreszierende Substanzen. Eine oder mehrere Lichtquellen sind so angeordnet, daß ihr Licht an bestimmten Bereichen der Oberfläche des Formkörpers in diesen eingestrahlt und im Formkörper weitergeleitet wird. Der Formkörper enthält Mittel zur gezielten Lichtauskopplung, so daß an ganz bestimmten Bereichen der Oberfläche des Formkörpers das Licht gezielt aus dem Formkörper ausgekoppelt wird.

Das in den Formkörper eingekoppelte Licht, meist sichtbares Licht oder UV-Licht, wird durch Anregung der fluoreszierenden Substanzen im Formkörper absorbiert. Das von den fluoreszierenden Substanzen emittierte Fluoreszenzlicht hat eine größere Wellenlänge als das ursprünglich eingekoppelte Licht. Der Formkörper wirkt auf das Fluoreszenzlicht wie ein Lichtwellenleiter. An den Wänden des Formkörpers findet eine Totalreflexion eines Großteils des Lichts statt.

Mittel zur Lichtstreuung können eine Strukturierung im Inneren des Formkörpers sein (interne Strukturierung), eine Strukturierung seiner Oberfläche oder eine lichtstreuende Schicht auf bestimmten Bereichen der Oberfläche des Formkörpers.

Die interne Strukturierung des Formkörpers, die Strukturierung der Oberfläche oder die Beschichtung der Oberfläche mit einer lichtstreuenden Schicht, bewirkt eine Streuung des Fluoreszenzlichtes im Formkörper, so daß es nicht mehr im Winkel für Totalreflexion auf die inneren Wände des Formkörpers auftrifft. Das gestreute Licht wird ausgekoppelt. Die Bereiche der Oberfläche des Formkörpers, an denen eine Abstrahlung des Fluoreszenzlichtes stattfindet, sind durch die Strukturierung vorgegeben, das heißt es handelt sich um eine gezielte Auskopplung. Durch eine entsprechende Strukturierung kann die Abstrahlung des Fluoreszenzlichtes z.B. in Form von Bildzeichen, Schriftzeichen oder Mustern erfolgen.

Der Formkörper besteht aus einem transparenten oder semitransparenten Kunststoff, wie thermoplastischer, elastomerer oder duromerer Kunstoff, in den fluoreszierende Substanzen eingearbeitet sind. Besonders geeignete transparente Kunststoffe sind Polycarbonate, Polyester, Polyacrylate, Polystyrole, Polyvinylpolymere, Copolymere aus Styrol und Acrylaten, Polyacrylnitril, Polysulfone, Polyethersulfone, cylische Polyolefine und -Copolymere und Celluloseacetate. Weitere Beispiele für geeignete Kunststoffe sind H. Domininghaus,"Die Kunststoffe und ihre Eigenschaften", 4. Auflage 1992 VDI Verlag, Düsseldorf und "Encyclopedia of Polymer Science and Engineering", 2nd Edition, J. Wiley & Sons, New York oder J. Brandrup, E.H. Immergut, ''Polymer Handbook", 3rd Edition, J. Wiley & Sons, New York zu entnehmen.

Erfindungsgemäß geeignete fluoreszierende Substanzen sind alle niedermolekularen, oligomeren und polymeren Substanzen, die Photofluoreszenz aufweisen. Beispiele für niedermolekulare Substanzen sind organische Fluoreszenz- und Laserfarbstoffe wie Cumarine, Perylene, Phthalocyanine, Stilbene und Distilbene, Distyryle, Methine, Azomethine, Phenanthrene, Rubren, Chinacridone oder optische Aufheller auf Basis heterocyclischer Verbindungen. Weiterhin können photo-fluoreszierende Metall- und Übergangsmetallkomplexe wie Aluminiumoxinat, Europiumkomplexe, Borchelate oder Galliumchelate verwendet werden. Als polymere fluoreszierende Materialien sind beispielsweise Poly-para-phenylen-vinylen (PPV) und PPV-Derivate wie Methoxy-ethylhexyl-oxy PPV (MEH-PPV) geeignet. Auch Polymere mit fluoreszierenden Segmenten in der Haupt- oder Seitenkette können eingesetzt werden. Es können auch verschiedene fluoreszierende Substanzen mit unterschiedlichem Absorptions- und Emissionsspektrum in einem Formkörper enthalten sein.

Die interne Strukturierung kann in lichtstreuenden Partikeln wie Glaskugeln, Glasfasem, Metalloxiden, SiO₂ oder Mineralien bestehen, die in den Formkörper eingearbeitet sind. Die Partikel wirken als Streuzentren für das auftreffende Fiuoreszenzlicht und lenken es so ab, daß es in einem steilen Winkel auf die Oberfläche des Formkörpers trifft und keiner Totalreflexion unterliegt, sondern ausgekoppelt wird. Denselben Effekt können Gaseinschlüsse im Formkörper haben, die innerhalb des Formkörpers Grenzflächen bilden, an denen das auftreffende Licht gestreut wird. Die Partikel können ihrerseits auch fluoreszierende Substanzen enthalten.

Eine Strukturierung der Oberfläche des Formkörpers kann in lichtstreuenden Partikeln bestehen, die in die Oberfläche des Formkörpers eingearbeitet sind. Die Partikel wirken als Streuzentren an der Oberfläche und koppeln das auftreffende Licht aus.

Die Oberfläche kann auch durch Rillen, Riefen, Kanäle und/oder Löcher strukturiert sein. Bei dieser Art der Oberflächenstrukturierung entstehen Streuzentren an der Oberfläche des Formkörpers. Die Kanten von in den Formkörper eingearbeiteten Kanälen können angefast sein.

Als lichtstreuende Schicht auf bestimmten Bereichen der Oberfläche des Formkörpers können Druckpasten - z.B. siebdruckfähige Formulierungen oder Abmischungen oder Farben - dienen, die nach bekannten Verfahren aufgebracht werden. An den auf diese Weise beschichteten Stellen der Oberfläche wird das auftreffende Licht nicht entsprechend dem Einfallswinkel reflektiert, sondern in den Formkörper zurückgestreut. Es trifft dann unter Winkeln; die keine Totalreflexion erlauben, auf die gegenüberliegende Oberfläche des Formkörpers und wird dort ausgekoppelt.

An Bereichen der Oberfläche, an denen kein Licht ausgekoppelt wird, kann der Formkörper mit einem reflektierenden Material, zum Beispiel einer Metallschicht aus Aluminium, Gold oder Silber oder mit einer anderen Schicht mit einem Brechnungsindex, der Totalreflexion erlaubt, beschichtet sein. Auch eine vollflächige nichttransparente Lackierung ist möglich. Diese reflektierenden Schichten verbessern die Wellenleitereigenschaft an den nicht strukturierten oder lichtstreuend beschichteten Stellen und erhöhen die Stärke des internen Strahlungsfeldes im Formkörper. Dies führt zu einer erhöhten Intensität des ausgekoppelten Lichts.

Zur Herstellung der Formkörper mit fluoreszierenden Substanzen werden zunächst die fluoreszierenden Substanzen in die transparenten oder semitransparenten Kunststoffe eingearbeitet. Die Einarbeitung erfolgt nach bekannten Verfahren wie Compoundierung oder durch gemeinsames Lösen der fluoreszierenden Substanzen mit dem Polymermaterial und anschließendes Einengen.

Die Formkörper werden nach bekannten Verfahren wie beispielsweise Spritzgießen oder Extrusion aus den die fluoreszierenden Substanzen enthaltenden Kunststoffen hergestellt. Folien können auch aus Lösemitteln durch Gießen oder andere bekannte Beschichtungsverfahren hergestellt werden. Es können auch Laminate aus einem Träger und einer Folie, die die fluoreszierenden Materialien enthält, verwendet werden.

Es können auch Lösungen aus fluoreszierenden Substanzen und dem Kunststoff durch Maßnahmen wie Gießen, Drucken, Sprühen auf eine geeignete Unterlage aufgebracht werden.

Für die interne Strukturierung durch die Einarbeitung von Partikeln, wie Glaskugeln oder Glasfasern, Metalloxiden, SiO₂ oder Mineralien werden die üblichen Verfahren zur Additivierung von Kunststoffen, beispielsweise Compoundierung, angewandt. Für die interne Strukturierung durch Gaseinschlüsse wird auf die üblichen Methoden, die beispielsweise bei der Schaumherstellung eingesetzt werden, zurückgegriffen.

Für die Strukturierung der Oberfläche des Formkörpers mit lichtstreuenden Partikeln werden in einem ersten Schritt die Partikel in einem Lösungsmittel für das Formkörpermaterial aufgeschlemmt und durch mechanische Hilfsmittel oder Vorrichtungen wie beispielsweise einem Stempel oder einer Druckmaschine auf die Oberfläche des Formkörpers aufgebracht. Dabei quellen die Bereiche, an denen die Partikeln und das Lösungsmittel die Oberfläche berührt, an. Anschließend läßt man das Lösemittel verdampfen. Dazu kann der Formkörper getempert werden bis das Lösemittel vollständig verdampft ist.

Die Strukturierung der Oberfläche der Formkörper kann auch durch Schleifen, Kratzen, Schälen, Sägen, Bohren, Körnen, Stanzen, Laserablation, Nadeldrucken oder sonstige mechanische Verfahren, die zu einer lokalen Deformation oder Veränderung der Oberfläche führen, erfolgen. Sie kann auch chemisch durch Anätzen mit einem Lösemittel strukturiert werden.

Die optische Anzeige kann mehrere Formkörper enthalten. Die Verbindung der einzelnen Formkörper kann beispielsweise durch Verklebungen oder mechanischen Vorrichtungen wie Einrahmungen, Rahmungen oder Verschraubungen erfolgen.

Als Lichtquelle sind allgemein lichtemittierende Strahlungsquellen geeignet, die zu einer optischen Anregung des fluoreszierenden Materials im Formkörper geeignet sind und damit die sichtbare Fluoreszenzemission auslösen. Besonders geeignet sind Strahlungsquellen, die - im Unterschied zum Sonnenlicht - eine definierte Emissionswellenlänge aufweisen wie Laser bzw. Laserdioden, Licht-Emittierende-Dioden (LED), UV-Lampen oder elektrolumineszierende Strahlungsquellen: Bevorzugt sind anorganische LEDs, UV-Lampen und elektrolumineszierende Strahlungsquellen. Wird als Strahlungsquelle ein elektrolumineszierendes Bauteil verwendet, kann es sich um organische oder anorganische Emitter handeln.

Zur Einkopplung des Lichts in den Formkörper kann die Lichtquelle in direktem Kontakt mit dem Formkörper stehen. Um einen direkten Kontakt herzustellen, kann die Lichtquelle an den Formkörper aufgeklebt, an- oder eingeschmolzen, aufgepresst oder in Bohrungen eingerührt werden. Die Lichtquelle kann auch in einem nichtdirekten Kontakt zum Formkörper stehen, sondern diesen nur lokal begrenzt anstrahlen.

Es können auch gleichzeitig verschiedene Lichtquellen, beispielsweise LEDs mit unterschiedlichen Emissionswellenlängen, zur photochemischen Anregung der fluoreszierenden Substanzen eingesetzt werden. Werden zusätzlich unterschiedliche fluoreszierende Substanzen eingesetzt, ist es möglich, durch geeignete Wahl der einstrahlenden Lichtquelle die verschiedenen fluoreszierenden Substanzen selektiv oder gemeinsam anzuregen und auf diese Weise sichtbares Licht unterschiedlicher Wellenlänge zu erzeugen und auszukoppeln.

Die optische Anzeige dient zur Wiedergabe von bildlichen Darstellungen, Farbmustern oder Informationen. Die Strukturierung dafür wird so vorgenommen, daß die das Fluoreszenzlicht abstrahlenden Flächen oder Bereiche Muster, Wörter, Ziffern, Symbole oder sonstige Zeichen bilden. Durch die Verwendung fluoreszierender Substanzen mit unterschiedlichem Emissionsspektrum, aber überlappendem Absorptionsspektrum und Lokalisation der verschiedenen fluoreszierenden Substanzen an verschiedenen Stellen des Formkörpers können mit einer schmalbandigen Lichtquelle z.B. einer einzigen LED gleichzeitig Informationen in verschiedenen Farben dargestellt werden.

Bei Verwendung von mehreren in ihren Wellenlängen unterschiedlichen Anregungslichtquellen in der optischen Anzeige und in ihren Emissionsspektren verschiedenen fluoreszierenden Substanzen, können verschiedenfarbige, unterschiedliche bildliche Darstellungen oder Informationen nacheinander oder gleichzeitig dargestellt werden.

Einsatzmöglichkeiten für die erfindungsgemäße optische Anzeige sind Anzeigeelemente oder Anzeigeeinheiten von Bedienungspanelen, Armaturenbrettern oder Instrumententafeln von Kraftfahrzeugen oder anderen Verkehrsmitteln, die zur Visualisierung und Informationsdarstellung genutzt werden, Schalterhinterleuchtungen oder Beleuchtung in Fahrzeugen oder an Fahrrädern.

Weitere Verwendungsmöglichkeiten sind Hinter- oder Beleuchtungseinheiten oder Lampen (Designerleuchten), Einrichtungsgegenstände, Möbelstücke, Bilderrahmen, Regale, Werbeartikel, Leuchtstäbe oder Leuchtkugeln, Haushaltswaren, Kinderspielzeug, Schreibtischutensilien, Nippes, "Krims-Krams" oder weitere Gegenstände des täglichen Gebrauchs.

Weitere Einsatzmöglichkeiten sind Verkehrsschilder (z.B. STOP-Schild), Straßenschilder, Hinweistafeln (wie Notausgangsschilder), Reklameaufbauten, Stellwände (z.B. im Messebau), Werbeanzeigen, Schautafeln und Warnschilder.

Werden als Formkörper Stränge oder Fasern eingesetzt, so können diese auch als Lichtleitsysteme (POF: polymeric optical fibers) verwendet werden.

Die Figuren zeigen:
- Fig. 1: Wellenleitung in einem durch Nadeldrucken strukturierten Formkörper.
- Fig. 2: Wellenleitung in einem durch Partikel strukturierten Formkörper.
- Fig. 3: Optische Anzeige mit mehreren Formkörpern.
- Fig. 4: Zwei Ausführungsformen für optische Anzeigen.
- Fig. 5: Optische Anzeige mit mehreren Formkörpem mit Abstrahlung von Fluoreszenzlicht in verschiedenen Farben.

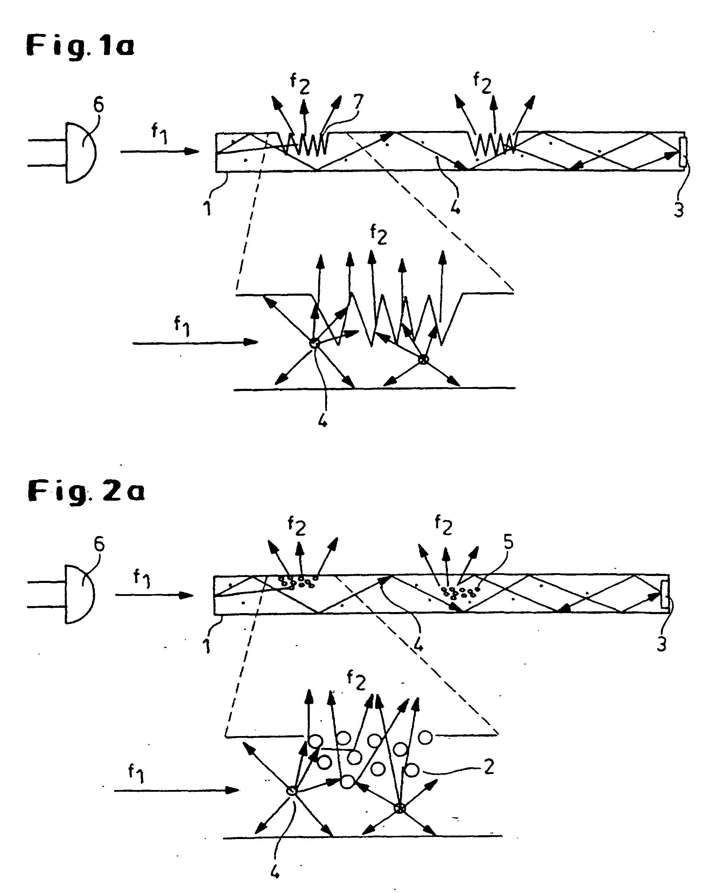

Die Fig. 1 und 2 zeigen die Wellenleitung in einem Formkörper 1, der strukturiert und an einer Kante 3 verspiegelt ist und fluoreszierende Substanzen 4 enthält. Mit einer Strahlungsquelle 6 wird blaues Licht der Wellenlänge f, auf eine schmale Seite des quaderförmigen Formkörpers 1, der in Seitenansicht dargestellt ist, eingestrahlt. Dieses Licht regt die fluoreszierenden Substanzen 4 an, die ihrerseits Fluoreszenzlicht der Wellenlänge f₂ emittieren. In Fig. 1 wird das Fluoreszenzlicht an mechanisch strukturierten Bereichen der Oberfläche gestreut, so daß es nicht mehr im Formkörper 1 weiter reflektiert wird, sondern von der Oberfläche des Formkörpers abgestrahlt wird. In Fig. 2 wird das Fluoreszenzlicht an Partikeln 2, die in die Oberfläche des Formkörpers eingearbeitet sind und an Partikeln 5, die sich im Inneren des Formkörpers befinden, gestreut, so daß es nicht mehr im Formkörper 1 weiter reflektiert wird, sondern von der Oberfläche des Formkörpers abgestrahlt wird.

### Beispiel 1:

Durch Spritzguß wurden Plättchen der Größe 20 x 30 x 3 mm³ aus den in Tabelle 1 aufgeführten Kunststoffen, die die in Tabelle 1 angegebenen fluoreszierenden Substanzen enthielten, hergestellt.

**Tabelle 1**

| Kunststoff | Fluoreszierende Substanzen |
|---|---|
| Polystyrol | 0,01 und 0,05 % Fb1 |
| Polystyrol | 0.0497 % Fb1 mit 0,0003 % Fb2 |
| Polystyrol | 0,01 und 0,05 % Fb2 |
| Polycarbonat | 0,01 und 0,05 % Fb2 |
| Polymethylmethacrylat | 0,01 und 0,05 % Fb2 |
| Polyethylenterephthalat | 0,01 und 0,05 % Fb2 |
| Styrol-Acrylnitril | 0,01 und 0,05 % Fb2 |
| Fb1 : Macrolex Fluorescent Yellow 10 GN, Bayer AG, Leverkusen | |
| Fb2: Macrolex Fluorescent Red G, Bayer AG, Leverkusen | |

Bei Beleuchtung mit einer UV-Lampe (Wellenlänge 366 oder 254 nm) oder einer blauen LED (RS 235-9900, Typ: ultra bright blue (954172)), wiesen alle Plättchen eine Oberfläche auf, die homogen ein schwaches Fluoreszenzlicht abstrahlte. Aus keiner Stelle der Oberfläche trat bevorzugt Licht aus.

Dann wurden die Oberflächen mit einem Nadeldrucker bearbeitet. Im räumlichen Bereich der Einkerbungen bzw. der Vertiefungen, die durch den Nadeldrucker eingeprägt worden waren, trat nun Licht bei Bestrahlung mit der UV-Lampe (Wellenlänge 366 oder 254 nm) oder einer blauen LED (RS 235-9900, Typ: ultra bright blue (954172)) bevorzugt aus, so daß visuell eine höhere Leuchtintensität im Vergleich zu den glatten Nachbarbereichen beobachtet wurde.

### Beispiel 2:

Auf ein Polycarbonat-Spritzgußteil gemäß Tabelle 1 mit 0,05 % Fb2 wurde eine Aufschlämmung von Glaskugeln 21 mit 50 - 210 µm Durchmesser in Methylenchlorid als Lösemittel in Flächen von einigen mm² mit einem Stempel aufgebracht. Das Lösemittel quoll dabei die zu strukturierende Oberfläche an. Die Glaskugeln drangen dadurch in die Oberfläche ein, blieben nach dem Abdampfen des Lösemittels fest gebunden. Bei Bestrahlung mit der UV-Lampe (Wellenlänge 366 oder 254 nm) oder einer blauen LED (RS 235-9900, Typ: ultra bright blue (954172)) wirkten sie als Streuzentren. An ihnen wurde das Fluoreszenzlicht gezielt ausgekoppelt und es erschienen helle Flecken auf einer an sich schwach leuchtenden Oberfläche.

### Beispiel 3:

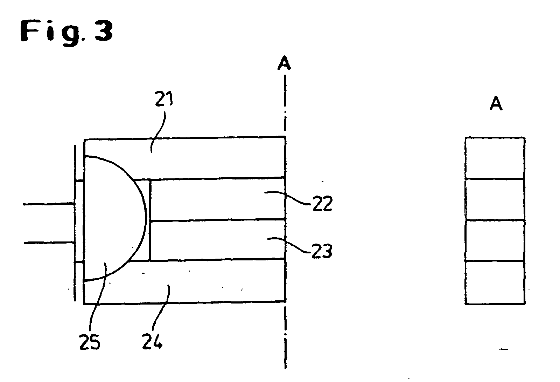

Optische Anzeige mit vier aufeinander liegenden Formkörpern 21, 22, 23, 24 aus Polycarbonatfolien einer Dicke von 0,75 mm mit je einem blauen, grünen, roten und gelben Floureszenzfarbstoff hergestellt (Fig. 3). Alle Platten hatten die gleiche Breite und Dicke. Die beiden mittleren Platten waren kürzer als die beiden äußeren Platten. Die Stirnenden der Formkörper sind an ihrer Oberfläche strukturiert. Die Lichtquelle 25, eine blaue LED (RS 235-9900, Typ: ultra bright blue (954172)), wurde in der Vertiefung zwischen den beiden äußeren Platten angebracht und dabei teilweise in die angebohrten äußeren Platten versenkt. Dabei berührte sie die beiden äußeren Platten direkt, während sie die beiden inneren Platten nur an ihrer Schmalseite anstrahlte. An der Seite A, an der die vier Platten bündig abschlossen, waren die farbigen Emissionen in Streifen entsprechend den strukturierten Stimflächen der Formkörper und den jeweils enthaltenen Fluoreszenzfarbstoffen nur dann deutlich zu sehen, wenn die LED zur Anregung der Emission der verschiedenen Fluoreszenzfarbstoffe eingeschaltet wurde.

### Beispiel 4:

In einen konisch geformten Spritzgußkörper aus Polycarbonat, das einen blauen Fluoreszenzfarbstoff enthält, wurde an der Ursprungsseite eine blaue LED (RS 235-9900, Typ: ultra bright blue (954172) eingestrahlt. Die der Ursprungsseite gegenüberliegende Seite war durch Abbrechen eines ursprünglich längeren Spritzkörpers entstanden und deshalb homogen aufgerauht. An der aufgerauhten Seite trat eine intensive, breit aufgefächerte Lichtemission auf, während an den Mantelflächen des konischen Körpers kein Licht austrat.

### Beispiel 5:

In eine den Fluoreszenzfarbstoff Makrolex 10 GN enthaltende Polycarbonatplatte wurde ein Quadrat mit einer Säge ausgeschitten. Die gesägte Innenkante ist homogen aufgerauht. Nach Anbringen einer blauen LED (RS 235-9900, Typ: ultra bright blue (954172) an der Außenseite konnte in dem im Inneren ausgeschnittenen Quadrat an der Innenkante eine verstärkte Lichtauskopplung (Emission) registriert werden.

### Beispiel 6:

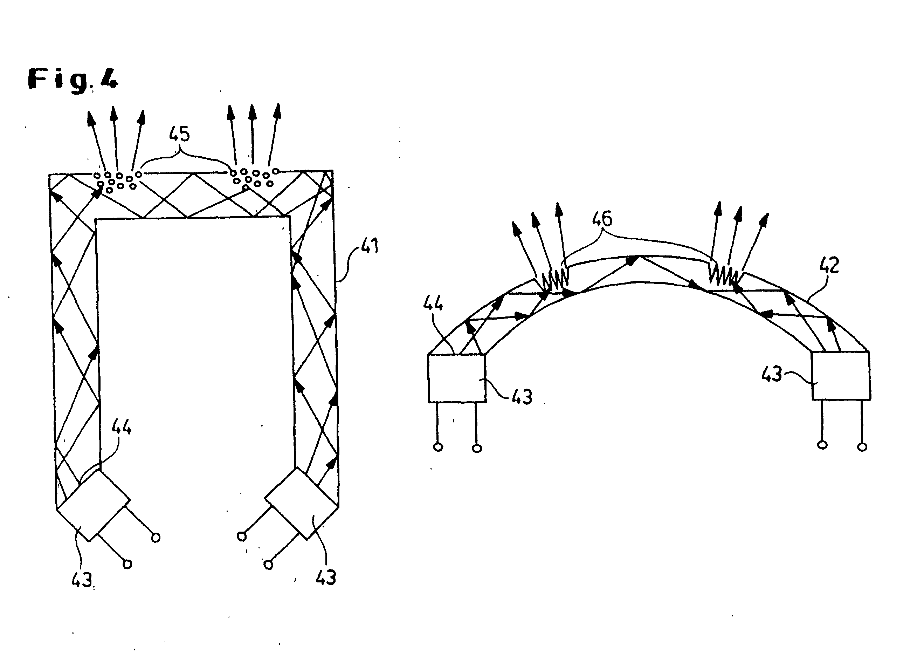

Fig. 4 zeigt zwei Ausführungsformen von optischen Anzeigen bestehend aus einem erfindungsgemäßen Formkörper 41 bzw. 42 und zwei Strahlungsquellen 43. Der Formkörper ist sehr lang im Vergleich zu seinem beleuchteten Querschnitt 44 und beschreibt einen rechteckigen Rahmen bzw. einen Abschnitt aus einem Ellipsenbogen. Der Formkörper, der an seinen beiden Enden durch zwei blaue Leuchtdioden 43 beleuchtet wurde, war an einigen Stellen seiner Oberfläche strukturiert 45 bzw. 46, so daß an diesen Stellen das Fluoreszenzlicht austrat.

### Beispiel 7:

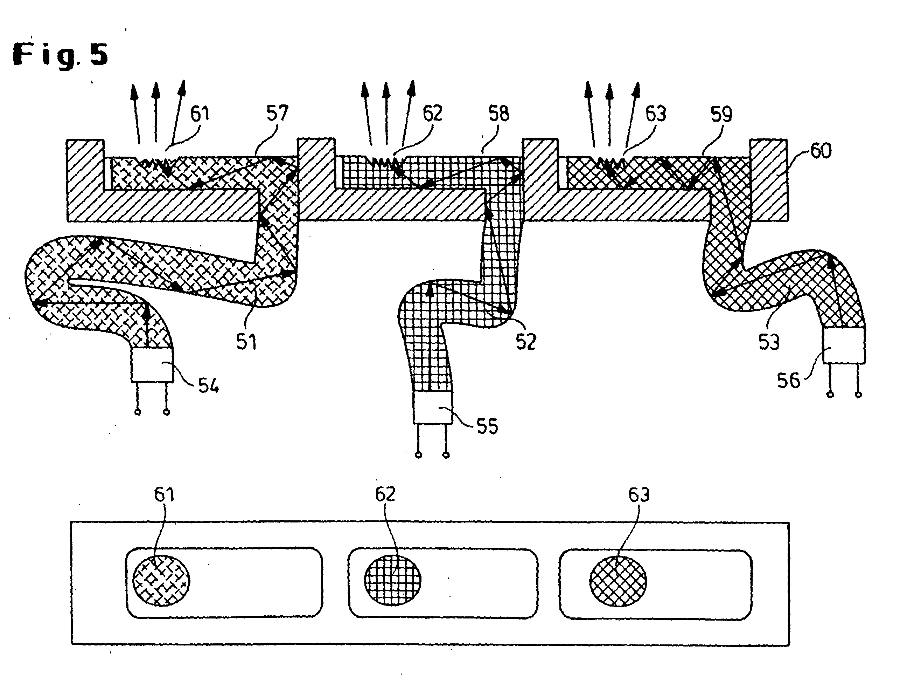

Fig. 5 zeigt eine optische Anzeige aus drei Formkörpern 51, 52, 53 mit jeweils unterschiedlichen fluoreszierenden Substanzen, die von drei Leuchtdioden 54, 55, 56 mit unterschiedlichen Emissionswellenlängen von einem Ende her beleuchtet werden. Die nicht beleuchteten Enden der Formkörper 57, 58, 59 sind in einer Halterung 60, so nebeneinander angeordnet, daß ein Beobachter nur die Enden der Formkörper, nicht aber die beleuchtende Lichtquelle sieht. Am nicht beleuchteten Endbereich ist ein Teil der Formkörperoberfläche strukturiert 61, 62, 63. An den strukturierten Stellen 61, 62, 63 tritt jeweils farbiges Licht entsprechend der fluoreszierenden Substanz aus, wie in der Draufsicht in Fig. 5 unten zu erkennen ist.

## Patentansprüche

1. Optische Anzeige aus wenigstens einem Formkörper (1), der aus einem oder mehreren transparenten oder semitransparenten Kunststoffen besteht und eine oder mehrere fluoreszierende Substanzen (4) enthält, der Formkörper Mittel zur gezielten Lichtauskopplung aufweist und eine einzelne Lichtquelle (6) so angeordnet ist, dass ihr Licht an bestimmten Bereichen der Oberfläche in den Formkörpers (1) eingekoppelt wird, im Formkörper (1) weitergeleitet wird und an ganz bestimmten anderen Bereichen der Oberfläche des Formkörpers, die durch die Mittel zur gezielten Lichtauskopplung festgelegt sind, mit einer grösseren Wellenlänge als die des eingestrahlten Lichtes wieder austritt, **dadurch gekennzeichnet, dass** die Lichtquelle (6) eine lichtemittierende Diode oder eine elektrolumineszierende Einheit, welche ausschließlich im blauen oder UV-Wellentängenbereich emittiert, ist und dass der Lichtaustritt gleichzeitig in verschiedenen Farben erfolgen kann.

2. Optische Anzeige nach Anspruch 1, **dadurch gekennzeichnet, dass** als Mittel zur Lichtauskopplung eine interne Strukturierung (5), eine Strukturierung der Oberfläche (2), (7) oder eine lichtstreuende Schicht auf der Oberfläche dient.

3. Optische Anzeige nach Anspruch 2, **dadurch gekennzeichnet, dass** die interne Struktur oder die Strukturierung der Oberfläche durch lichtstreuende Partikel, wie Glaskugeln, Glasfasern, Metalloxide, SiO2, Mineralien gebildet ist.

4. Optische Anzeige nach Anspruch 3, **dadurch gekennzeichnet, dass** die lichtstreuenden Partikel ihrerseits fluoreszierende Substanzen enthalten.

5. Optische Anzeige nach einem der Ansprüche 2 bis 4, **dadurch gekennzeichnet, dass** die Strukturierung der Oberfläche dadurch hergestellt wird, dass die Partikel aufgeschlämmt in einem Lösungsmittel für das Formkörpermaterial mit einem Pressstempel auf die Oberfläche des Formkörpers aufgebracht und in die Oberfläche gepresst werden, und anschliessend das Lösemittel verdampft wird.

6. Optische Anzeige nach einem der Ansprüche 2, **dadurch gekennzeichnet, dass** die interne Struktur durch Gaseinschlüsse im Formkörper gebildet wird.

7. Optische Anzeige nach Anspruch 2, **dadurch gekennzeichnet, dass** die Oberflächenstruktur des Formkörpers durch Rillen (7), Riefen, Kanäle und/oder Löcher in der Oberfläche gebildet ist.

8. Optische Anzeige nach Anspruch 7, **dadurch gekennzeichnet, dass** die Kanten der Kanäle, angefast sind.

9. Optische Anzeige nach Anspruch 2, **dadurch gekennzeichnet, dass** die lichtstreuende Schicht eine Druckpaste oder Farbe ist.

10. Optische Anzeige nach einem der Ansprüche 1 bis 9, **dadurch gekennzeichnet, dass** der Formkörper an den Bereichen der Oberfläche, an denen kein Licht ausgekoppelt wird, mit einer totalreflektierenden Schicht beschichtet ist.

## Claims

1. Optical display made of at least one shaped body (1) that is composed of one or more transparent or semitransparent plastics and contains one or more fluorescent substances (4), wherein the shaped body has means for the selective decoupling of light and an individual light source (6) is arranged in such a way that its light is coupled into the shaped body (1) at certain regions of the surface, is transmitted in the shaped body (1) and emerges, with a larger wavelength than that of the incident light, at specific different regions of the surface of the shaped body that are determined by the means for the purposeful light decoupling, **characterised in that** the light source (6) is a light-emitting diode or an electroluminescent unit that emits exclusively in the blue or UV wavelength region, and that the exiting of the light may occur simultaneously in different colours.

2. Optical display according to Claim 1, **characterized in that** an internal structuring (5), a structuring of the surface (2), (7) or a light-scattering layer on the surface serves as means for the light decoupling.

3. Optical display according to Claim 2, **characterized in that** the internal structure or the structuring of the surface is formed by light-scattering particles, such as glass spheres, glass fibres, metal oxides, SiO₂ or minerals.

4. Optical display according to Claim 3, **characterized in that** the light-scattering particles contain in turn fluorescent substances.

5. Optical display according to one of Claims 2 to 4, **characterized in that** the structuring of the surface is produced by applying the particles, suspended in a solvent for the shaped body material, to the surface of the shaped body with a press dye, pressing the particles into the surface and then evaporating the solvent.

6. Optical display according to one of Claims 2, **characterized in that** the internal structure is formed by gas inclusions in the shaped body.

7. Optical display according to Claim 2, **characterized in that** the surface structure of the shaped body is formed by grooves (7), furrows, channels and/or holes in the surface.

8. Optical display according to Claim 7, **characterized in that** the edges of the channels are chamfered.

9. Optical display according to Claim 2, **characterized in that** the light-scattering layer is a printing paste or ink.

10. Optical display according to one of Claims 1 to 9, **characterized in that** the shaped body is coated with a totally reflecting layer at those regions of the surface at which no light is decoupled.

## Revendications

1. Affichage optique constitué d'au moins un corps moulé (1) comprenant une ou plusieurs matières plastiques transparentes ou semi-transparentes et contenant une ou plusieurs substances fluorescentes (4), le corps moulé présentant des moyens de découplage optique ciblé et une source de lumière individuelle (6) étant disposée de telle façon que sa lumière est couplée dans certaines zones des surfaces dans le corps moulé (1), est transmise dans le corps moulé (1) et ressort en d'autres zones bien déterminées de la surface du corps moulé, qui sont définies par les moyens de découplage optique ciblé, avec une longueur d'onde plus grande que celle de la lumière irradiée, **caractérisé en ce que** la source de lumière (6) est une diode électroluminescente ou une unité électroluminescente qui émet exclusivement dans la plage de longueurs d'onde bleue ou UV et **en ce que** la sortie de lumière peut se faire en même temps en différentes couleurs.

2. Affichage optique suivant la revendication 1, **caractérisé en ce qu'**une structuration interne (5), une structuration de la surface (2) (7) ou une couche de diffusion de lumière sur la surface sert de moyen de découplage.

3. Affichage optique suivant la revendication 2, **caractérisé en ce que** la structure interne ou la structuration de la surface est formée par des particules diffusant la lumière, telles que des billes de verre, des fibres de verre, des oxydes métalliques, SiO₂, des minéraux.

4. Affichage optique suivant la revendication 3, **caractérisé en ce que** les particules diffusant la lumière contiennent à leur tour des substances fluorescentes.

5. Affichage optique suivant l'une des revendications 2 à 4, **caractérisé en ce que** la structuration de la surface est réalisée en ceci que les particules mises en suspension dans un solvant pour le matériau du corps moulé sont appliquées avec une presse à matricer sur la surface du corps moulé et pressées dans la surface, et que le solvant est ensuite évaporé.

6. Affichage optique suivant l'une des revendications 2, **caractérisé en ce que** la structure interne est formée par des inclusions de gaz dans le corps moulé.

7. Affichage optique suivant la revendication 2, **caractérisé en ce que** la structure de la surface du corps moulé est formée par des sillons (7), des stries, des canaux et/ou des trous dans la surface.

8. Affichage optique suivant la revendication 7, **caractérisé en ce que** les bords des canaux sont chanfreinés.

9. Affichage optique suivant la revendication 2, **caractérisé en ce que** la couche diffusant la lumière est une pâte d'impression ou une couleur.

10. Affichage optique suivant l'une des revendications 1 à 9, **caractérisé en ce que** le corps moulé est revêtu d'un matériau à réflexion totale dans les zones de la surface auxquelles aucune lumière n'est découplée.
